# EUROPEAN PATENT APPLICATION

(11) **EP 0 851 076 A1**
(43) Date of publication of application: **01.07.1998**
(21) Application number: 97204083.6
(22) Date of filing: 23.12.1997
(51) Int. Cl.: E04H 6/40, B60S 13/02, B61J 1/02

(54) **Rotating platform for vehicle**

(30) Priority: 27.12.1996 GB 9626964; 22.01.1997 GB 9701301; 13.02.1997 GB 9702981
(71) Applicant: Hirst, John, Bradford, West Yorkshire (GB)
(72) Inventor: Hirst, John, Bradford, West Yorkshire (GB)
(74) Representative: Wharton, Peter Robert

(57) **Abstract**

A platform assembly (10), in particular for accommodating a vehicle thereon, comprises a foundation member (20), a platform (14, 16) disposed above said foundation member (20), and bearing means (30) for allowing rotation of the platform (14,16) relative to the foundation member (20).

## Description

The present invention relates to a platform onto which a car or other vehicle may be driven, the platform being rotatable in order to rotate the vehicle parked on the platform, in restricted spaces where it is not possible to turn the vehicle in the normal way.

According to a first aspect of the present invention there is provided a platform assembly comprising a foundation member, a platform disposed above said foundation member, and bearing means for allowing rotation of the platform relative to the foundation member.

The assembly may either be installed in a cavity previously excavated in the ground, or alternatively it may be secured to the ground without the need for excavation.

Conveniently, the platform includes means for engaging at least one wheel of a car or other vehicle parked thereon, and in the case where the assembly is secured to the ground the platform will be slightly above ground level and there are therefore provided a pair of ramps disposed anywhere around the perimeter of the platform, conveniently at approximately 90° to each other, to provide entry/exit ramps.

Preferably, the foundation member is in the form of a ring and the platform, which is also circular and sized so as to accommodate a car or other vehicle thereon, is mounted centrally with respect to the foundation member on the bearing means permitting rotation of the platform relative to the fixed foundation member.

The platform may be a single component, but in the preferred embodiment it comprises two separate components. One of these is a framework of an annular outer member to which four equal length cross members are attached in a generally square, intersecting pattern. These cross members may additionally be further strengthened by shorter and narrower members spanning the distance between cross members, and/or the distance between the cross members and the annular outer member. The other component of the platform is an upper decking member which is fixed at a number of points to the underlying framework. The decking preferably includes at least one access flap therein, which is hinged and normally lies flush with the decking, but which may be opened to allow access to the structures underneath for the purposes of maintenance and repair.

Conveniently, the bearing means comprises a slewing ring, which is essentially a large diameter bearing, composed of two concentric rings one of which is fixed relative to the ground/foundation member and the other of which is fixed to the rotating platform, the two rings including bearings between adjacent vertical flanges.

In order to support the platform around the periphery thereof there are provided a number of vertically disposed rollers (typically eight) which are mounted on the foundation ring at generally equal spacings around the ring - when the platform is rotated the underneath of the edge of the platform runs on these rollers.

In cases where the assembly is installed within an excavation, to accommodate the inaccuracies involved, the assembly preferably includes means for maintaining the concentricity of the platform and foundation ring, such means conveniently comprising two elongate members each fixed at each end to the foundation ring across a diameter thereof, and a baseplate centrally disposed between the two elongate members, said baseplate including means for securing one of the rings of the slewing ring thereto, the elongate members and the baseplate together ensuring concentricity of the slewing ring/platform with respect to the foundation member/excavation.

In cases where the assembly is simply secured to the ground without any excavation, the elongate members are not required and therefore the foundation ring, and the slewing ring baseplate, are bolted directly into the ground.

The bearing means alternatively or additionally comprises a number of horizontally disposed rollers (typically six) mounted on the foundation ring at generally equally spaced positions around the ring, such that during rotation of the platform a part of the framework will run on these horizontally disposed rollers. It is envisaged that these six horizontally disposed rollers, in conjunction with the eight vertically disposed rollers, will enable the slewing ring arrangement to be dispensed with, for a simpler installation.

Conveniently, the assembly also includes means for temporarily securing the platform in one or more particular rotational positions with respect to the foundation frame. Such securing means preferably comprises at least one pin locator fixed to the outside of the foundation ring and extending generally downwardly into the ground, and at least one pin locating lug fixed to the outer edge of the platform and including a hole for alignment with said locator(s) and a pin adapted to be inserted through the hole and into the locator to secure the platform to the foundation ring.

In order to provide an anti-theft facility, the assembly conveniently also includes means for enabling the platform to be locked to the foundation member in one or more particular rotational positions, preferably at 90° to the direction of travel of the vehicle onto and off the platform. Such locking means preferably comprises at least one, preferably two, lock lugs secured to the foundation member (hereinafter referred to as the foundation lock lug(s)) and at least one corresponding lug lock secure to the outer edge of the platform (hereinafter referred to as the platform lock lug(s)), each of said lugs having a hole therein such that the hole in the platform lock lug may be aligned, upon rotation of the platform relative to the foundation member, with the hole in the foundation lock lug to receive a padlock or similar locking device.

In order that the assembly may more readily be transported to the installation site, the platform, framework or foundation member, or any one or combination of these, is preferably provided in two or more sections, to be bolted, welded or otherwise secured together at the installation site.

Conveniently, the assembly includes drive means for driving the platform relative to the foundation member, said drive means preferably being movable between an operative position in which the drive means engages the platform, and a stowed, inoperative position in which the drive means is disengaged from the platform.

The drive means preferably comprises a wheel mounted for rotation about a substantially vertical axis, such that the edge of the wheel engages the edge of the platform when the drive means is in the operative position, said wheel being driven by a geared motor unit.

Preferably, that portion of the platform which is engaged by the wheel has a suitable anti-slip or traction enhancing coating , for example "Watco Safety Grip" (an epoxy resin coating) which improves the contact between the surface and the wheel when water is present on the surface and/or the wheel. The drive means, comprising the wheel and geared motor unit is preferably mounted within a housing to be installed in an ancillary excavation at the side of the platform assembly, said housing fitting into a space where a portion of the foundation ring is removed for this purpose, such that the drive wheel can engage with the edge of the platform.

According to a second aspect of the present invention there is provided a method of installing a platform assembly comprising a foundation member, a platform disposed above said foundation member and bearing means for allowing rotation of the platform relative to the foundation member, the installation method including the steps of:-
securing the foundation member either directly on to the ground, or within a cavity previously excavated in the ground, and
positioning the platform above said foundation member.

In the case where the assembly is to be installed within an excavation, (hereinafter referred to as the "installation with excavation" method) the ground is first excavated to accommodate at least the foundation member, the excavation is then partially filled with concrete to provide a concrete lined cavity, the foundation member and bearing means are positioned within said cavity and the ground around the outside of the foundation member is reinstated as necessary. In the case where the bearing means comprises a slewing ring, the platform is secured to the slewing ring, but in the case where the bearing means comprises a series of horizontally disposed rollers these are already mounted on the foundation member prior to installation thereof and the platform would simply be dropped into place within the foundation member.

Preferably, the installation with excavation method also includes providing a central concrete plinth within the cavity, to act as a seating for the bearing means (slewing ring).

The installation with excavation method also conveniently includes incorporating a drain within the concrete, said drain sloping generally downwardly from the centre of the cavity away from the general area of the excavation, in order to direct water away from the concrete lined cavity.

In the case of the surface mounted method of installation, the actual sequence of steps followed depends on whether the bearing means comprises a slewing ring, or the horizontally disposed rollers. The former arrangement involves securing the foundation member to the ground, positioning the platform above said foundation member, the platform having the bearing means secured thereto, and securing the bearing means to the ground, whereas the latter arrangement is a simpler procedure, involving securing the foundation member (with rollers attached) to the ground, and positioning the platform within the foundation member.

Optionally, the surface mounted method of installation also includes the steps of providing a pair of ramps to enable the vehicle to drive onto, and off, the platform.

Embodiments of the present invention will now be described, by way of example only, with reference to the accompanying drawings, in which:-
Figure 1 is a schematic illustrating the appearance of a first embodiment of the platform assembly of the present invention, namely the excavation installed assembly with slewing ring,
Figure 2 (incorporating Figures 2(i) through 2(viii)) illustrate in detailed sectional views various structures and fixings included within the assembly of Figure 1,
Figure 3 is a vertical section through the central region of the assembly of Figure 1 when installed in the ground,
Figure 4 (incorporating Figures 4(i) and 4(ii)) are vertical sections through the components of the assembly of Figure 1,
Figure 5 is a plan view (with underlying structures also shown) of the assembly of Figure 1,

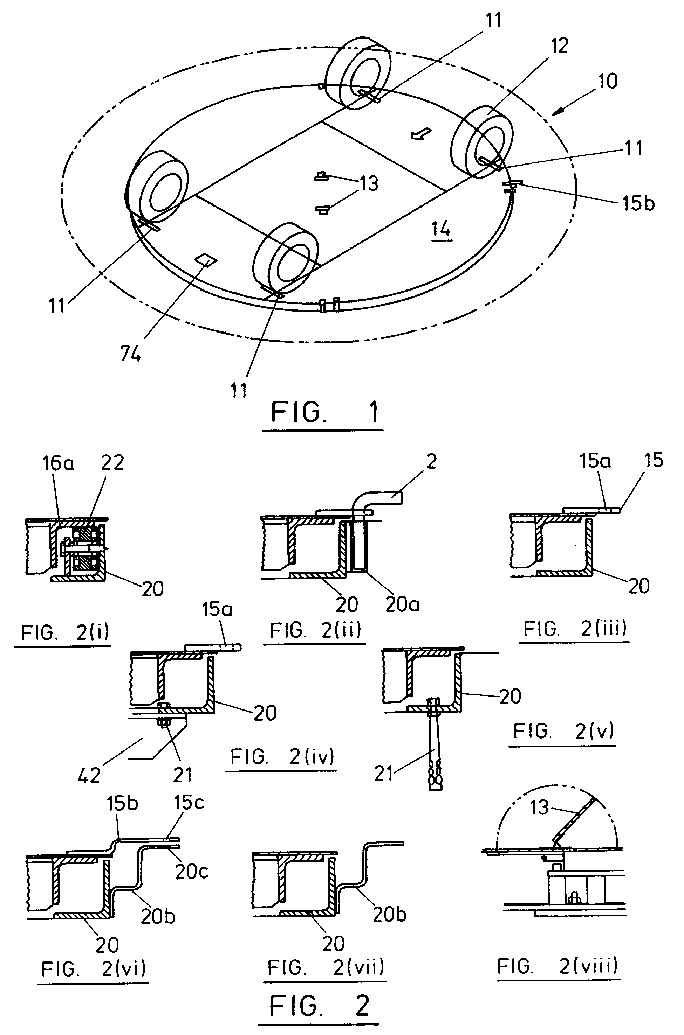

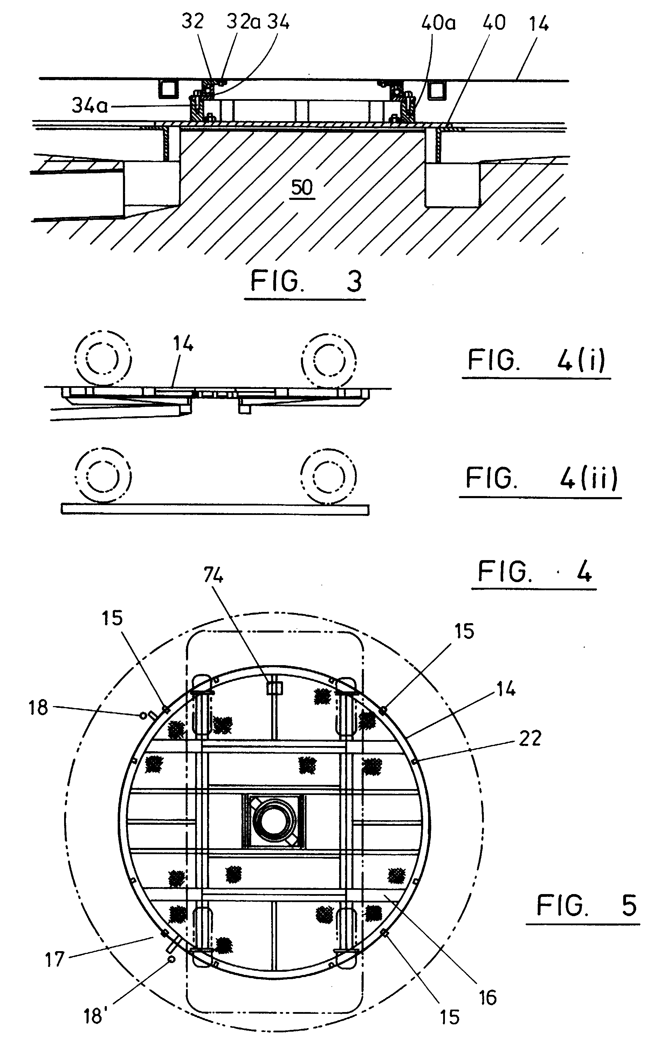

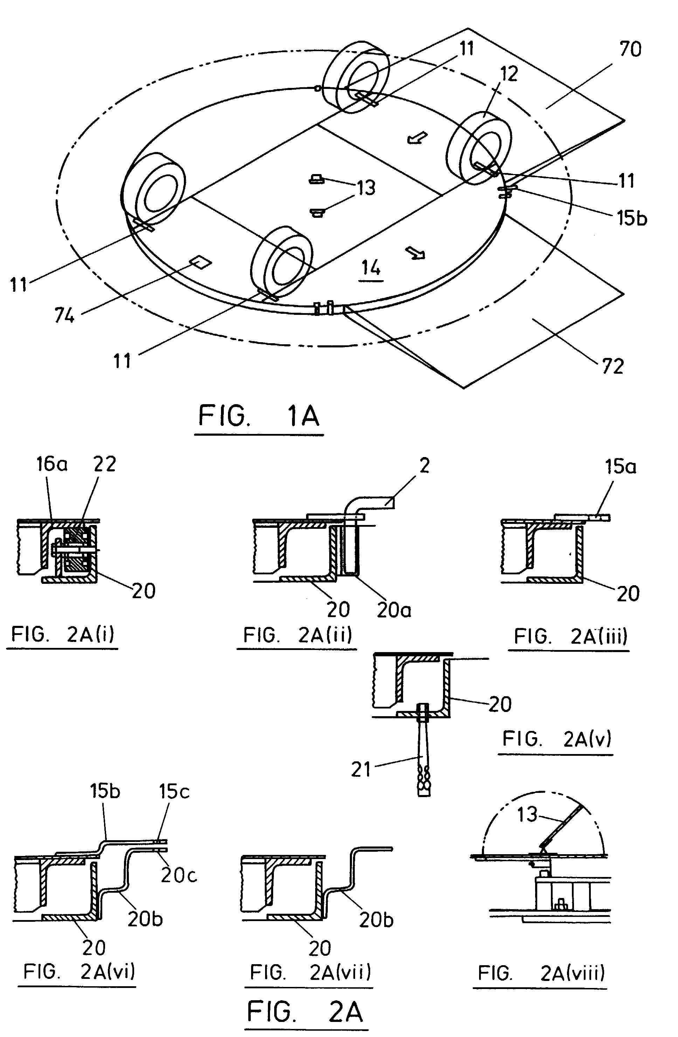

Figure 1A is schematic illustrating the appearance of a second embodiment of the platform assembly of the present invention, namely the surface mounted installation with slewing ring,
Figure 2A (incorporating Figures 2A(i) through 2A(viii) but excluding 2A(iv)) illustrate in detailed sectional views various structures and fixings included within the assembly of Figure 1A,

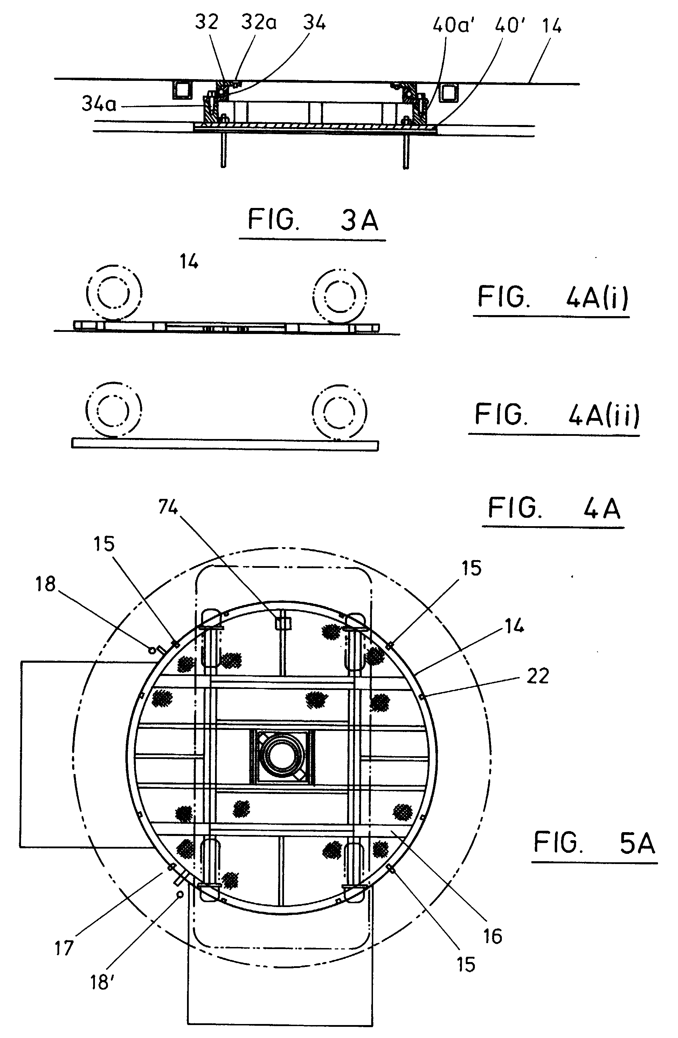

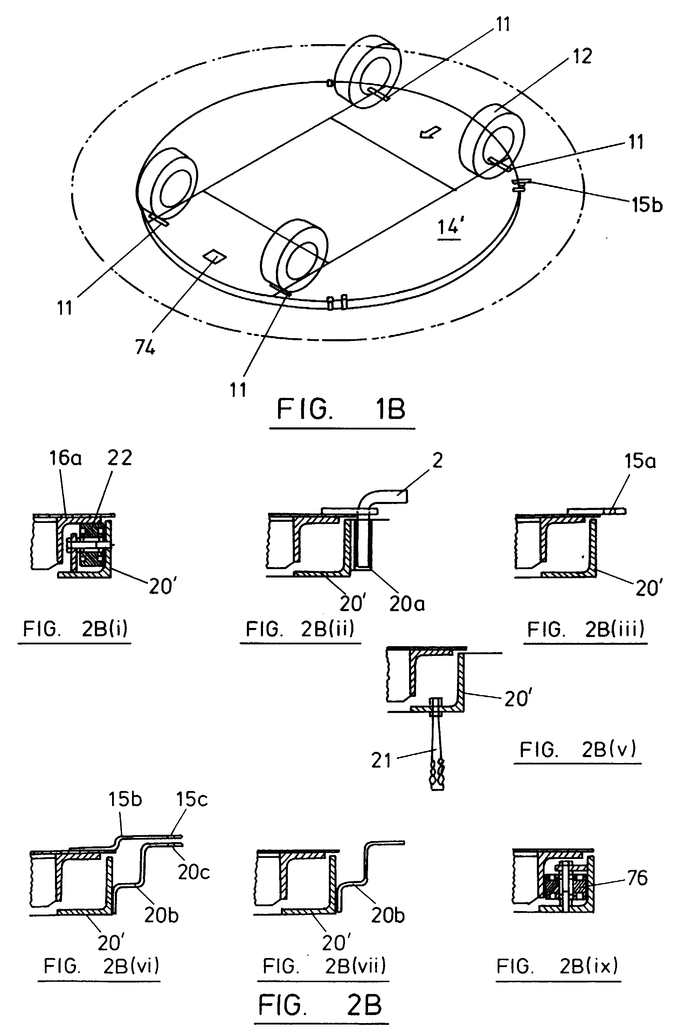

Figure 3A is a vertical section through the central region of the assembly of Figure 1A when installed onto the ground,
Figure 4A (incorporating Figures 4A(i) and 4A(ii)) are vertical sections through the components of the assembly of Figure 1A,

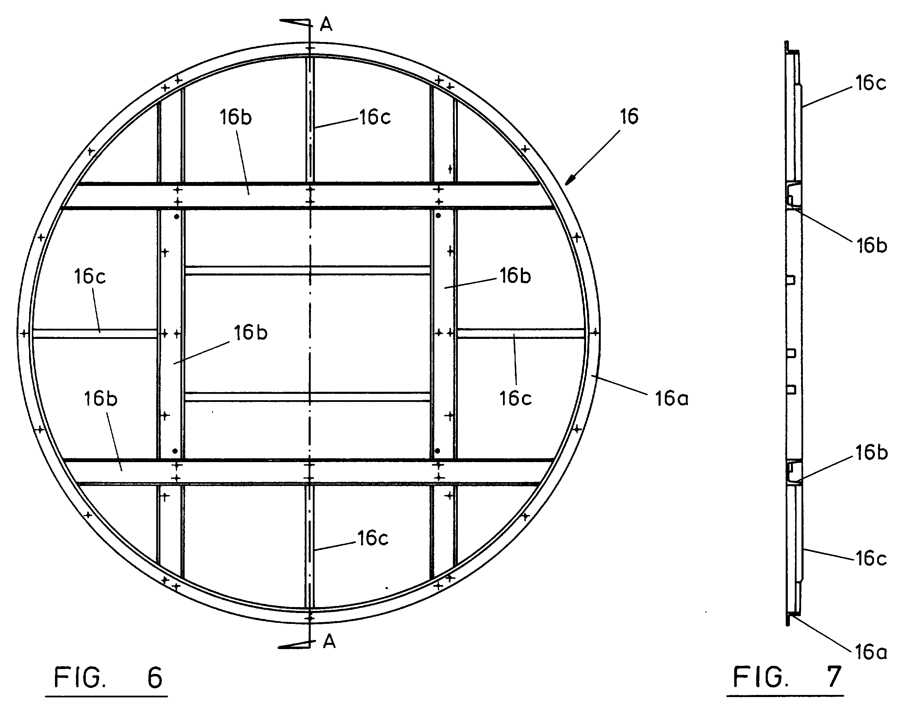

Figure 5A is a plan view (with underlying structures also shown) of the assembly of Figure 1A,
Figure 1B is a schematic illustrating the appearance of a variant of the second embodiment of the platform assembly of the present invention, namely the surface mounted assembly with horizontally disposed rollers,
Figure 2B (incorporating Figures 2(i) through 2(ix) but excluding 2B(iv) and 2B(viii)) illustrate in detailed sectional views various structures and fixings included within the assembly of Figure 1B,

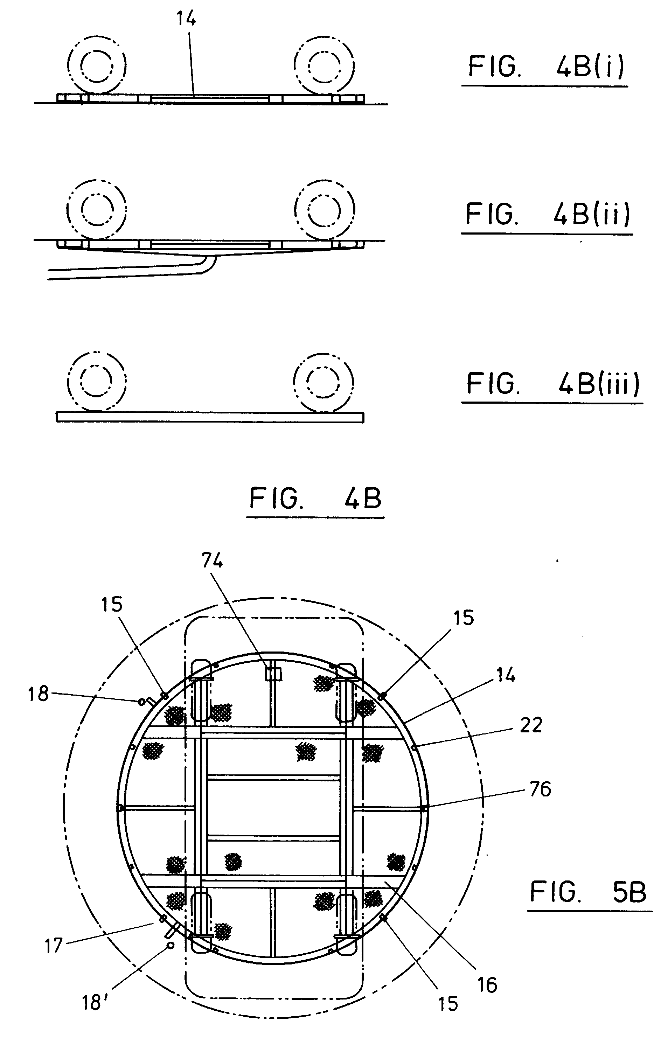

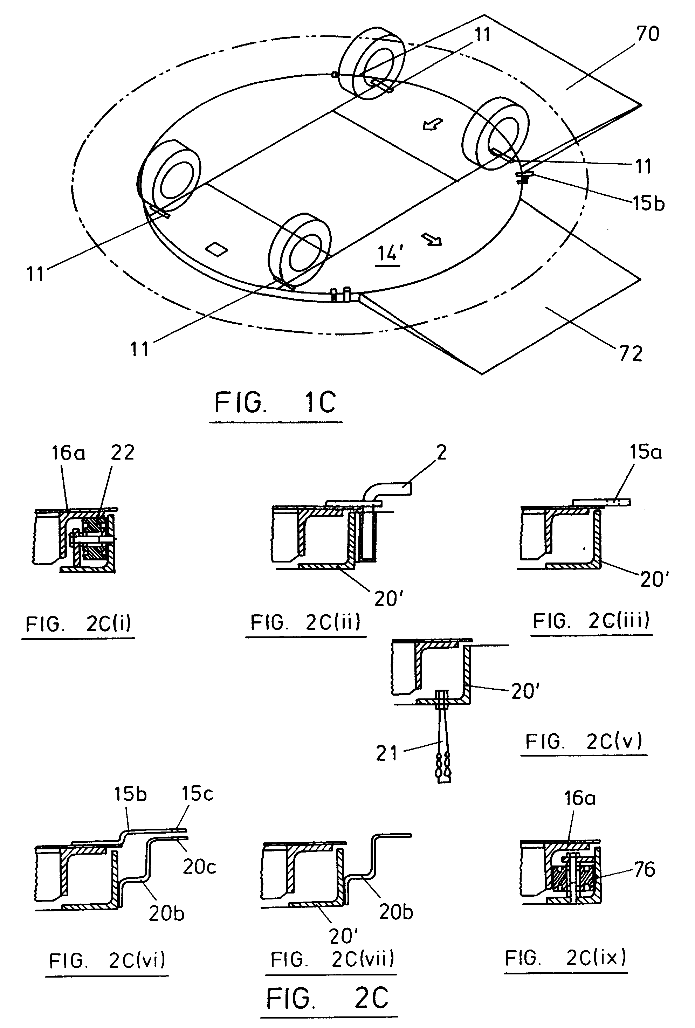

Figure 4B (incorporating Figures 4(i) through 4(iii) are vertical sections through the components of the assembly of Figure 1B,
Figure 5B is a plan view (with underlying structures also shown) of the assembly of Figure 1B,
Figure 1C is a schematic illustrating the appearance of a variant of the first embodiment of the platform assembly of the present invention, namely the surface mounted assembly with horizontally disposed rollers,
Figure 2C (incorporating Figures 2C(i) through 2C(ix) but excluding 2C(iv) and 2C(viii)) illustrate in detailed sectional views various structures and fixings included within the assembly of Figure 1C,

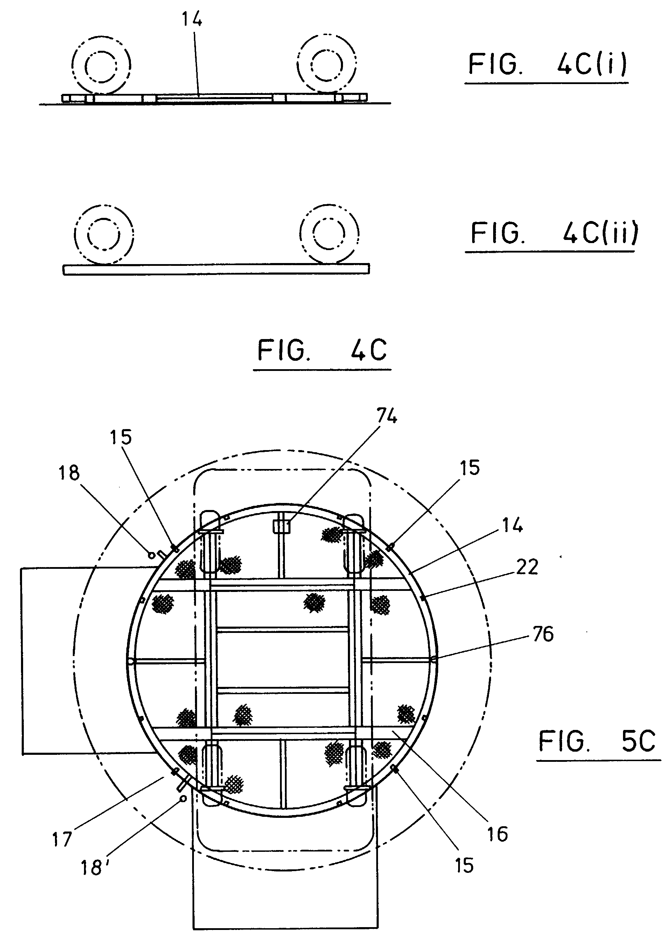

Figure 4C (incorporating Figures 4C(i) and 4C(ii) are vertical sections through the components of the assembly of Figure 1C,
Figure 5C is a plan view (with underlying structures also shown) of the assembly of Figure 1C,
Figure 6 is a plan view of the framework,
Figure 7 is a section on A-A of Figure 6,

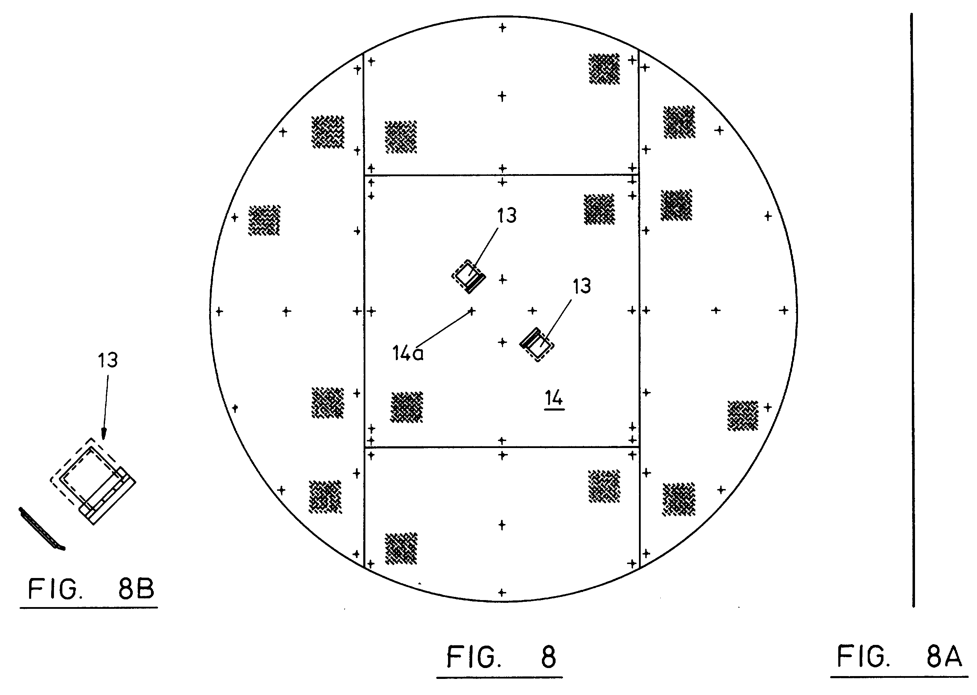

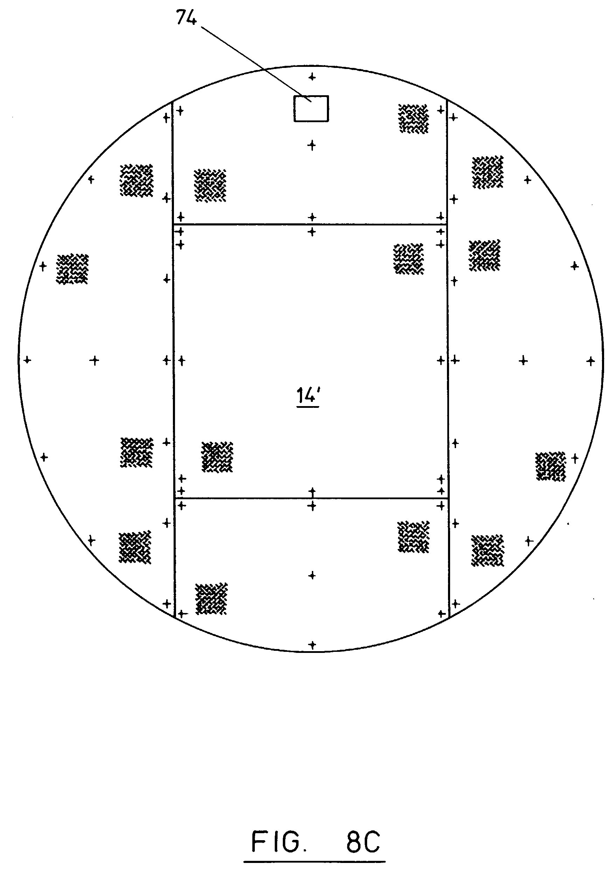

Figure 8 is a plan view of the decking,
Figure 8A is a side view of the decking,
Figure 8B illustrates the access flap in plan and side views,
Figure 8C is a plan view of a variant of the decking,

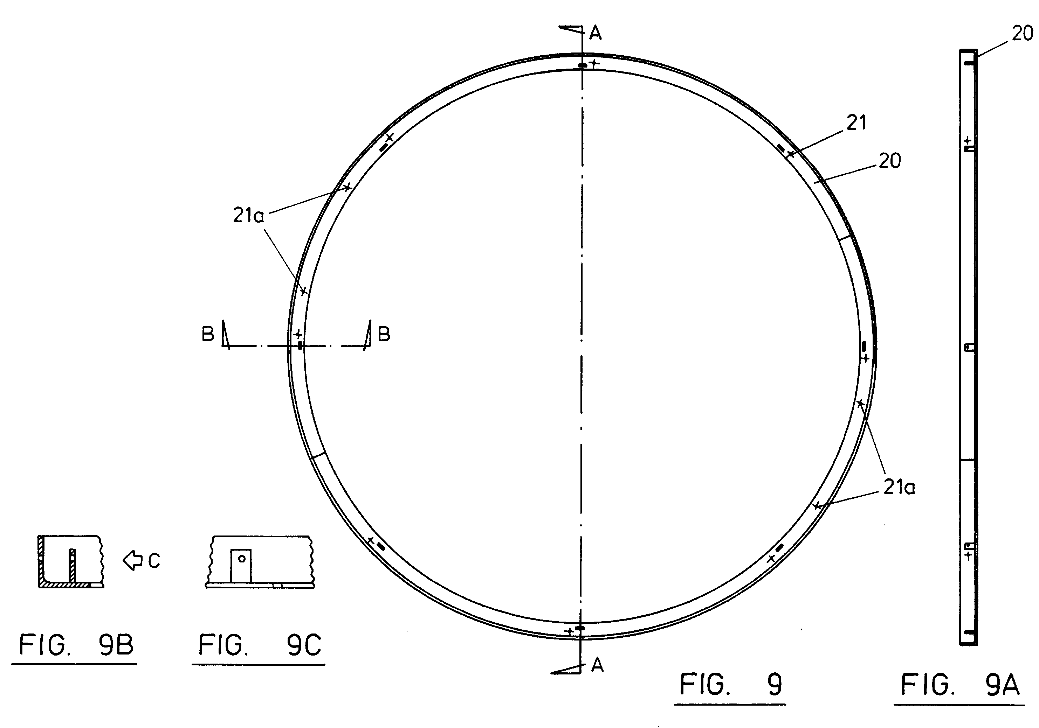

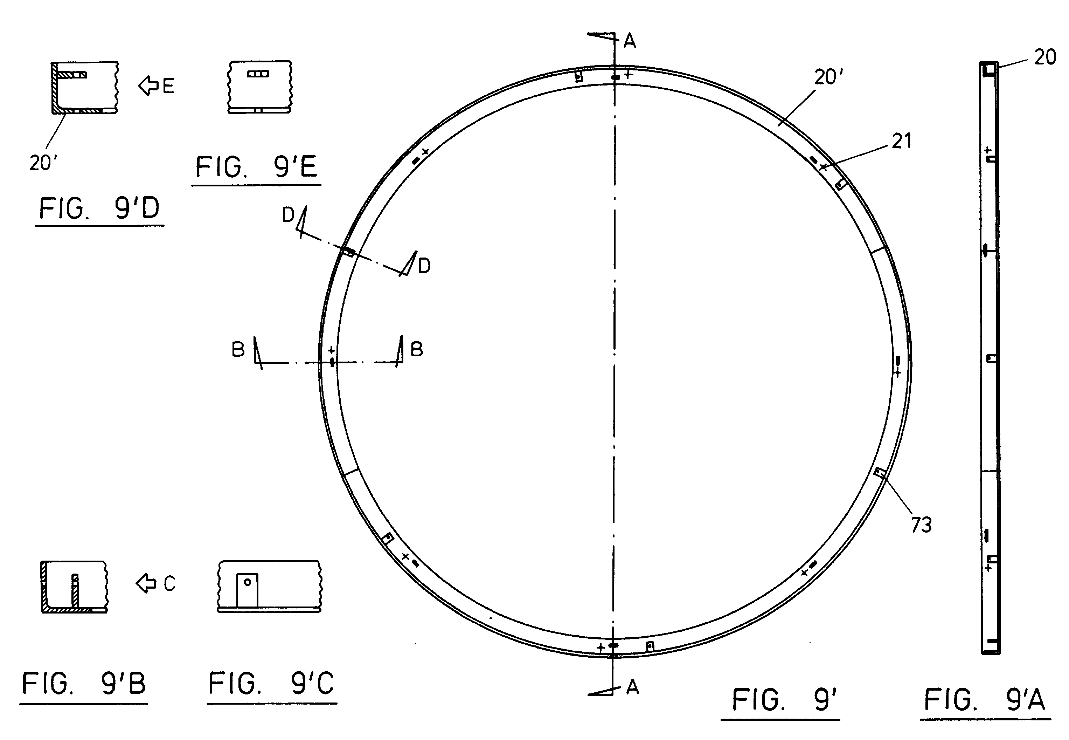

Figure 9 is a plan view of the foundation member,
Figure 9A is a section on A-A of Figure 9,
Figure 9B is a part section on B-B of Figure 9,
Figure 9C is a view on arrow C of Figure 9B,
Figures 9' through 9'E illustrate a variant of the foundation ring and the roller brackets disposed thereon,

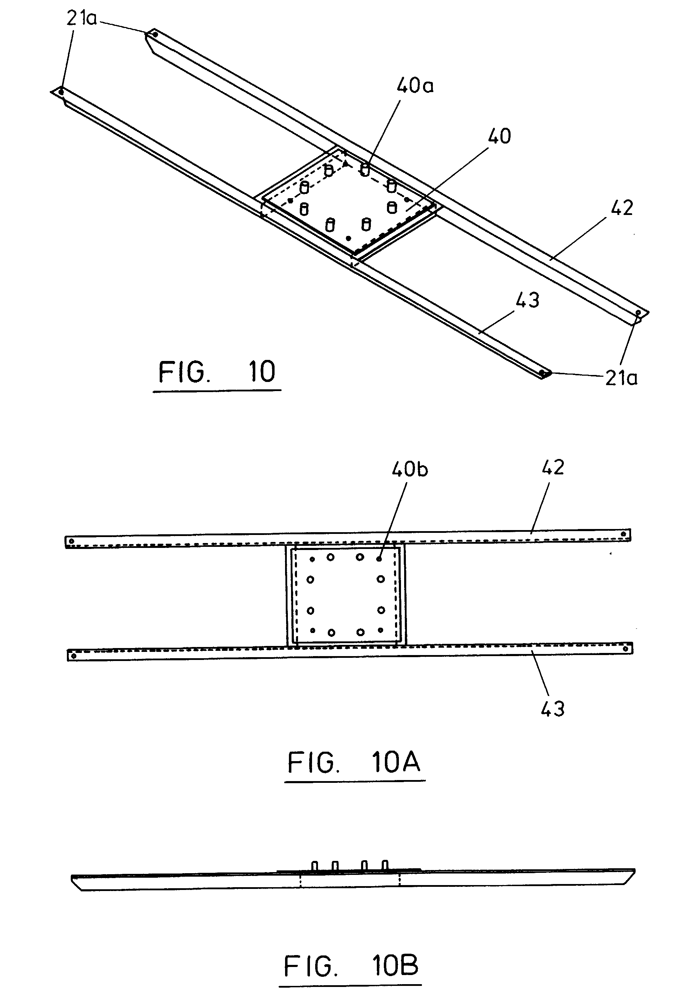

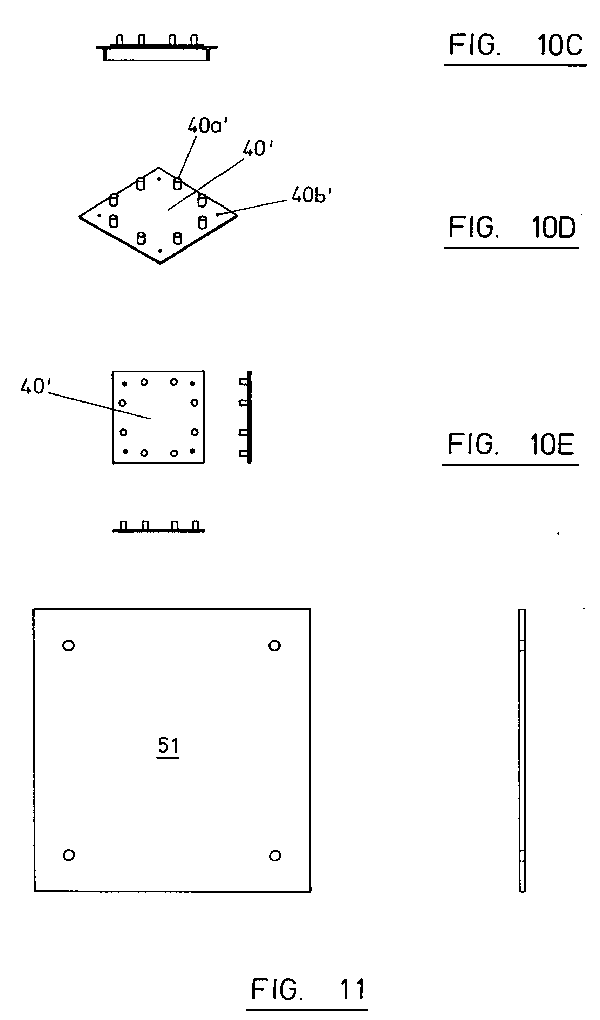

Figures 10, 10A and 10B are perspective, plan and side views respectively of the baseplate and associated support structure, Figure 10C is a side view of the baseplate,
Figure 10D is a perspective view of an alternative embodiment of the baseplate, for use when installing the assembly directly onto the ground,
Figure 10E illustrates the alternative baseplate of Figure 10D in plan and side views,
Figure 11 is plan view of a spacer for seating on the central concrete plinth,

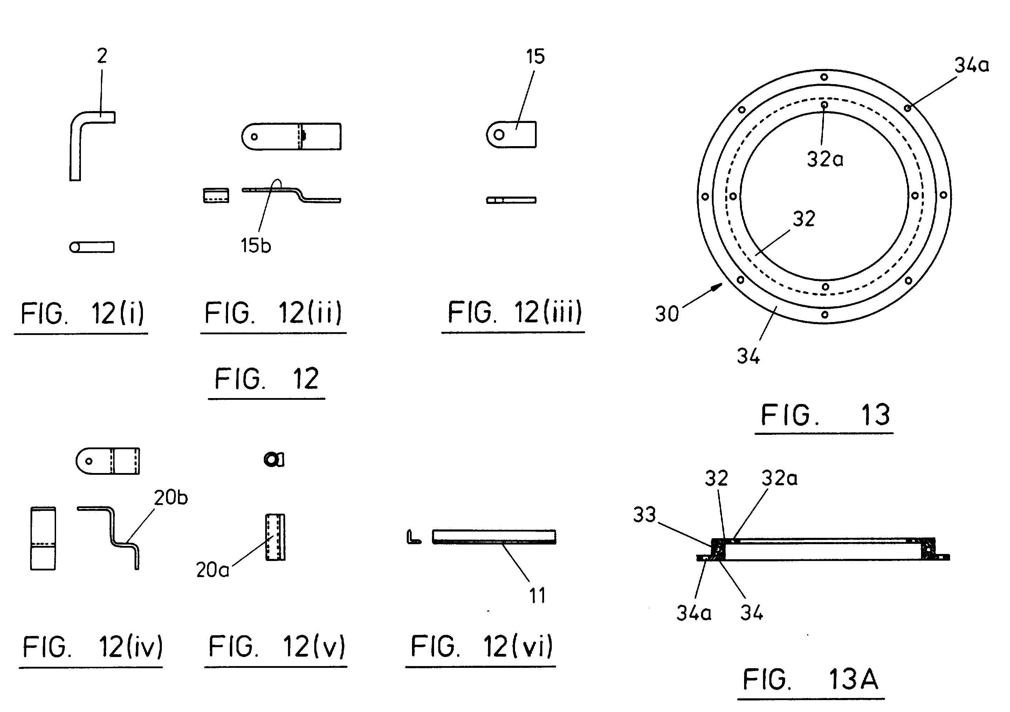

Figures 12(i), 12(iii), 12(v) and 12(vi) illustrate the locating pin, pin locating lug, pin locator and wheel locator respectively,
Figures 12(ii) and 12(iv) illustrate the platform lock lug and the foundation lock lug respectively,
Figures 13 and 13A illustrates the slewing ring in plan view and side view respectively,

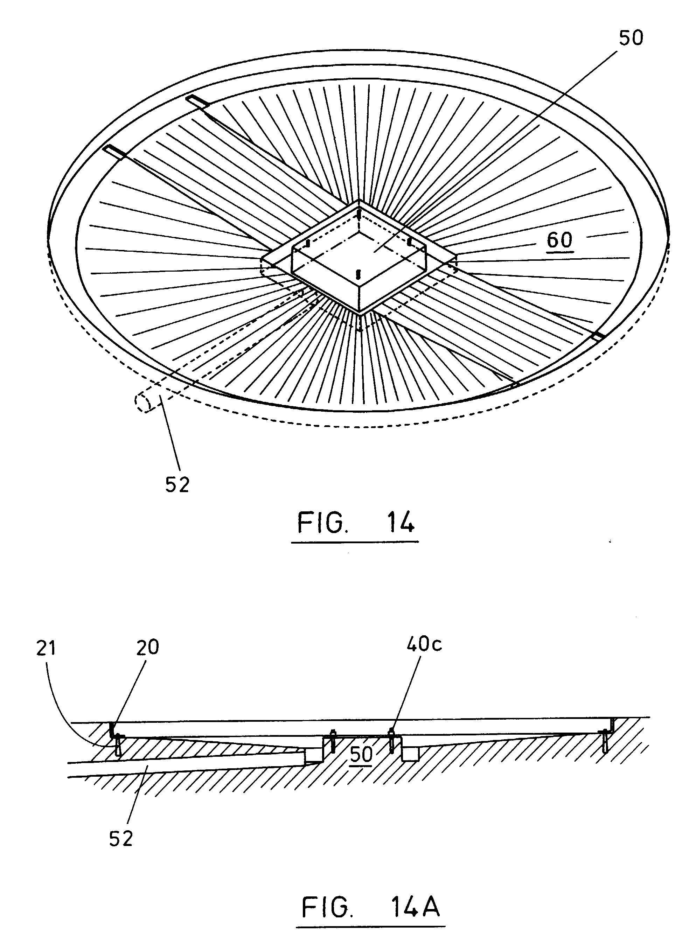

Figures 14 and 14A illustrate the foundation details,

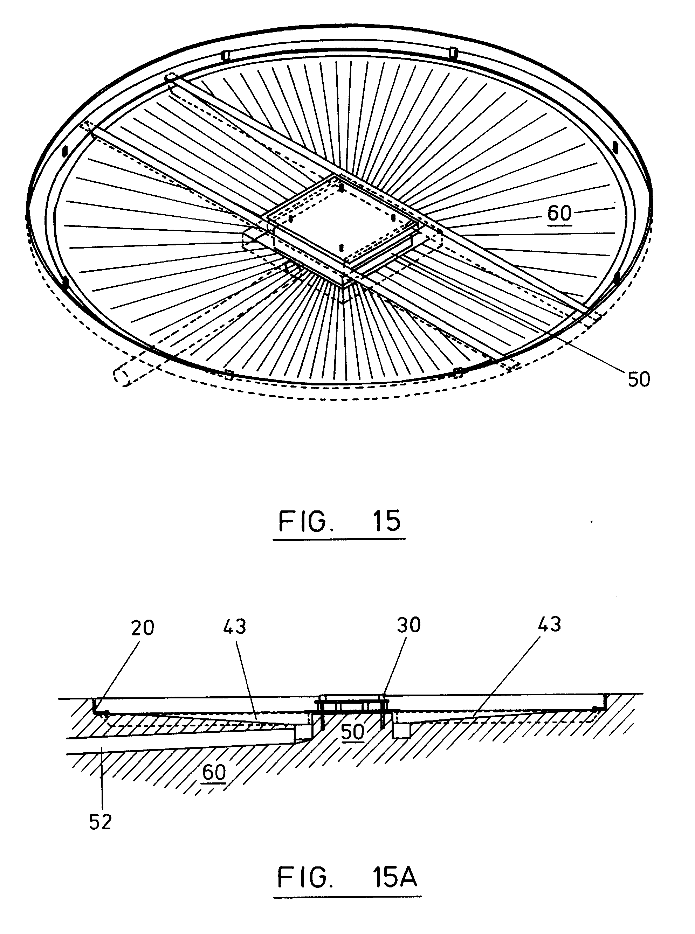

Figures 15 and 15A illustrate the foundation details with the foundation ring and slewing ring support structure installed,

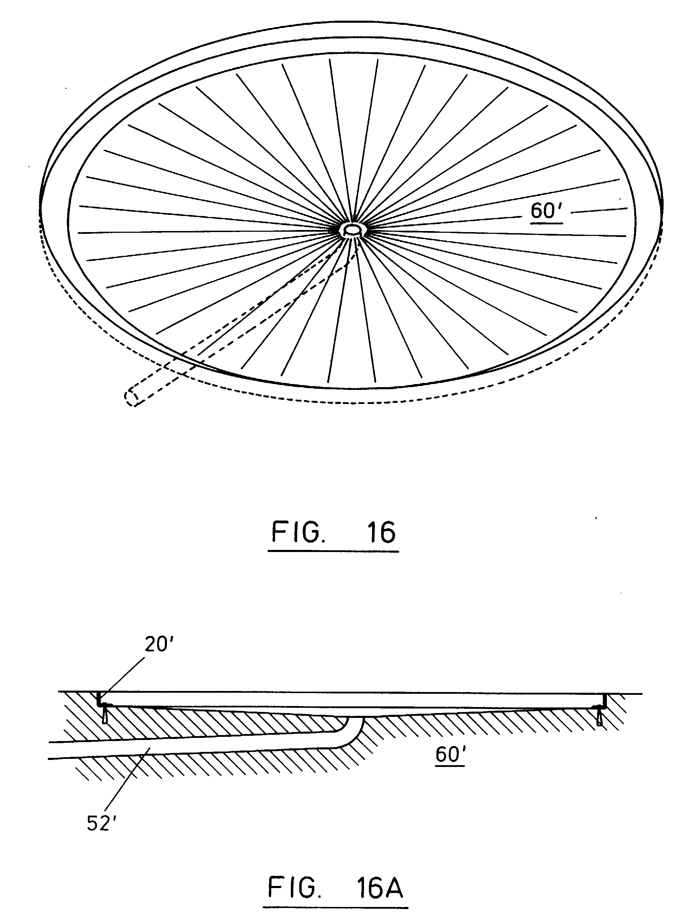

Figures 16 and 16A illustrate the method of installing the foundation ring in the case where the bearing means comprises horizontally disposed rollers, and

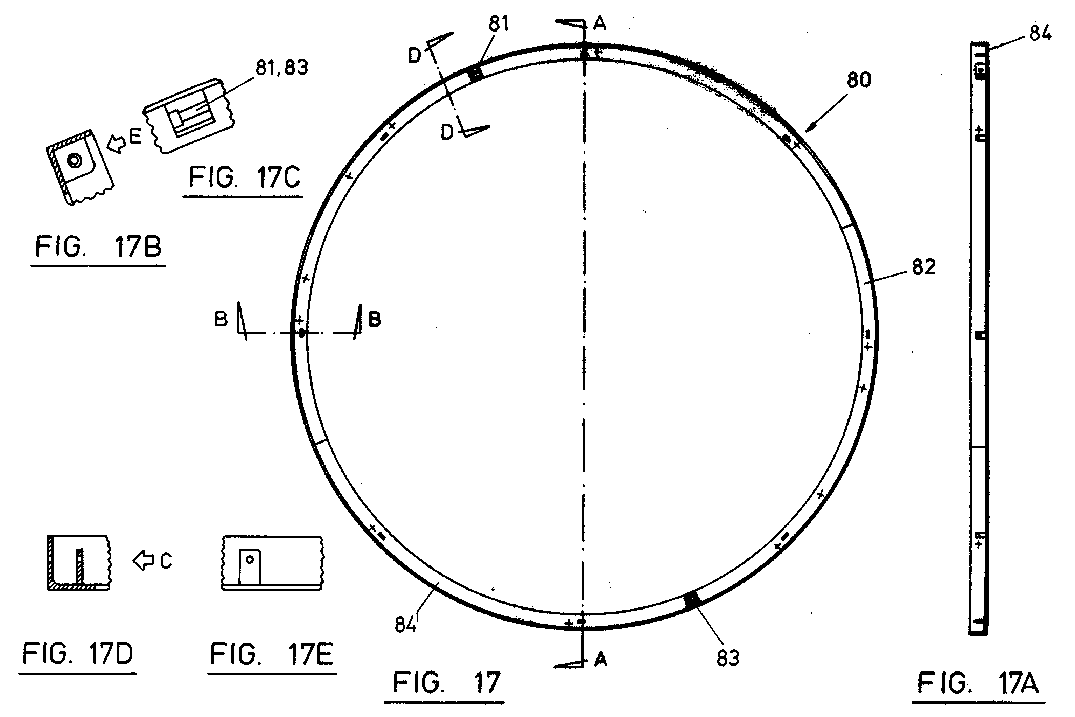

Figure 17 illustrates in plan view the "flatpack" version of the foundation ring,
Figure 17A is a section through A-A of Figure 17,
Figure 17B is a part section through D-D of Figure 17,
Figure 17C is a view on arrow E of Figure 17B,
Figure 17D is a part section through B-B of Figure 17,
Figure 17E is a view on arrow C of Figure 17D,

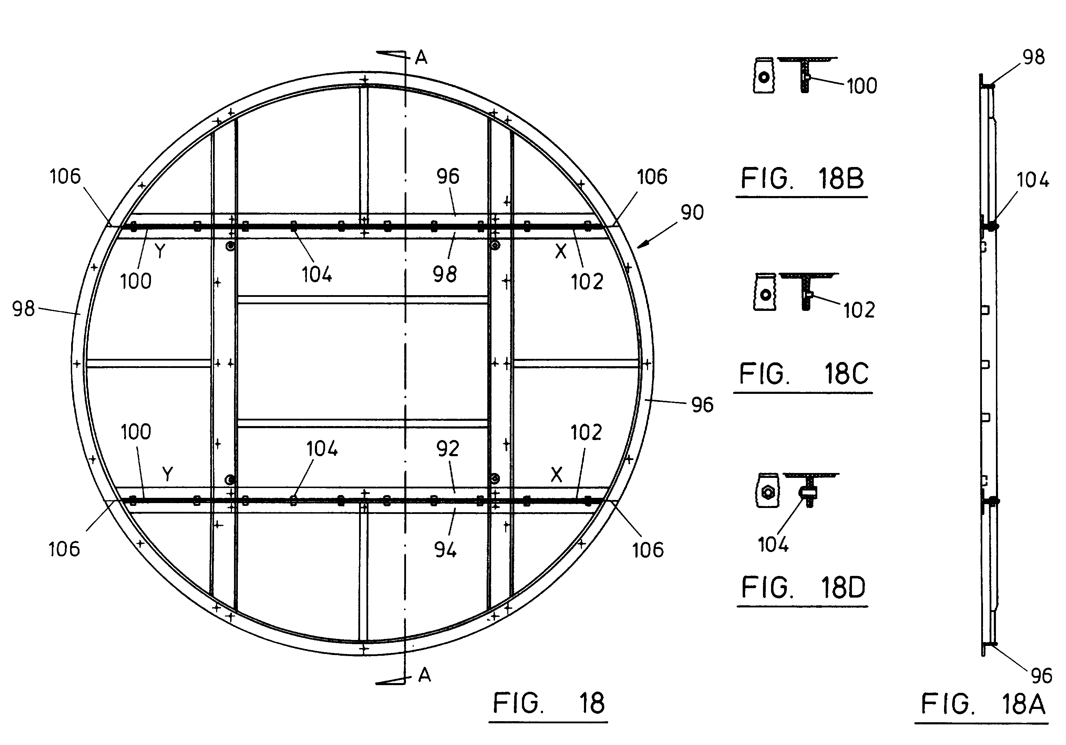

Figure 18 is a plan view of the "flatpack" version of the framework,
Figure 18A is a section through A-A of Figure 18,
Figure 18B illustrates in detail the location pin arrangement at positions "Y" shown in Figure 18,
Figure 18C illustrates in detail the location pin arrangement at positions "X" shown in Figure 18,
Figure 18D illustrates in detail one of the screw and nut arrangements illustrated in Figure 18,

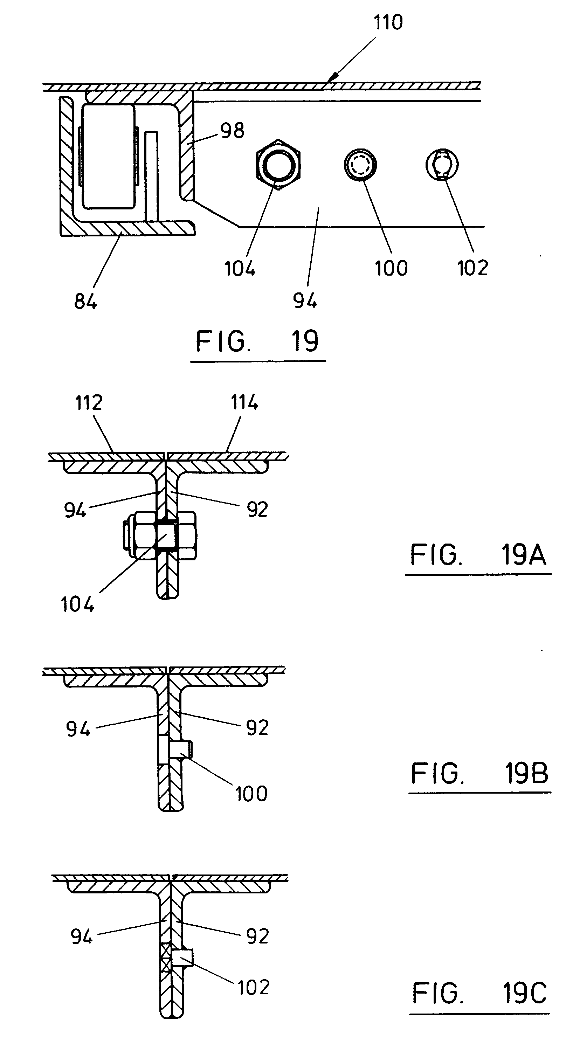

Figure 19 illustrates the appearance of the edge of one of the main framework members and the overlying platform,
Figure 19A, 19B and 19C are enlarged versions of Figures 18D, 18B and 18C respectively, and also show the overlying platform sections,

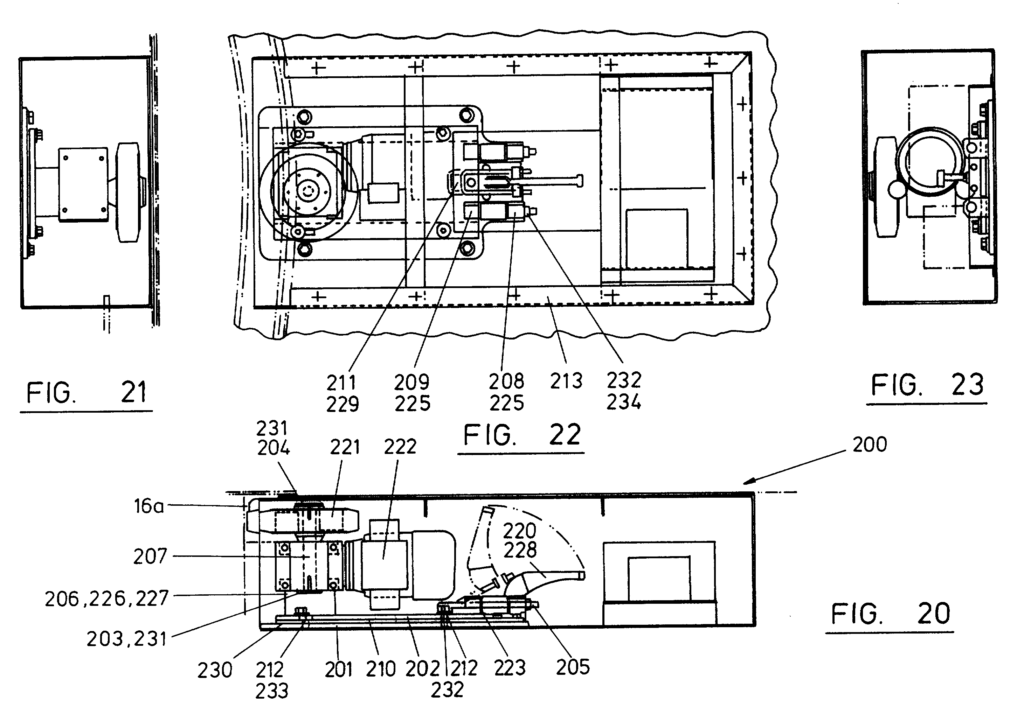

Figures 20, 21, 22 and 23 illustrate in different views the general arrangement of the drive unit,

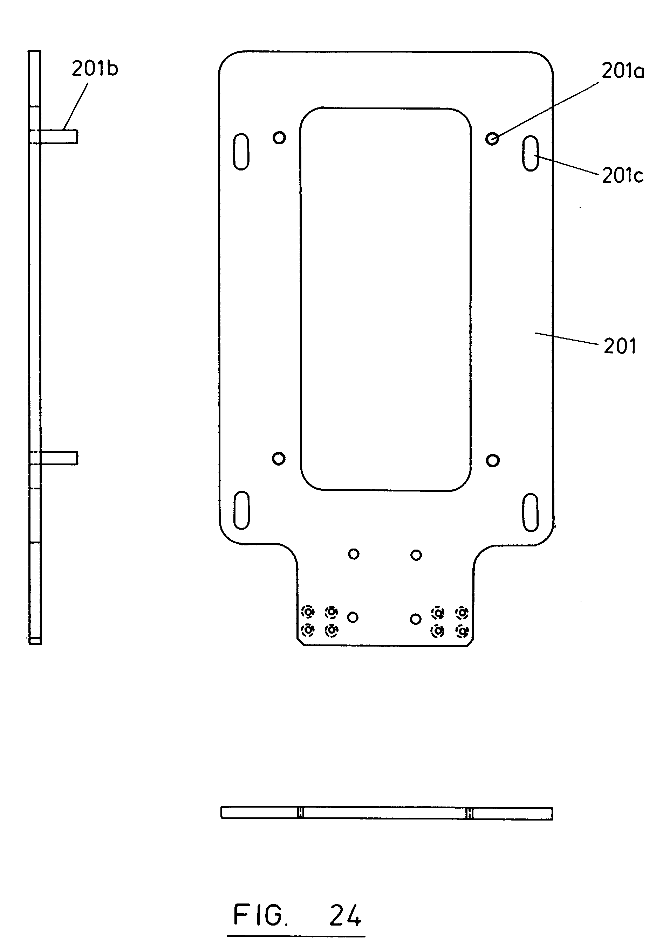

Figure 24 illustrates in different views the detail of the base plate shown in Figure 20,

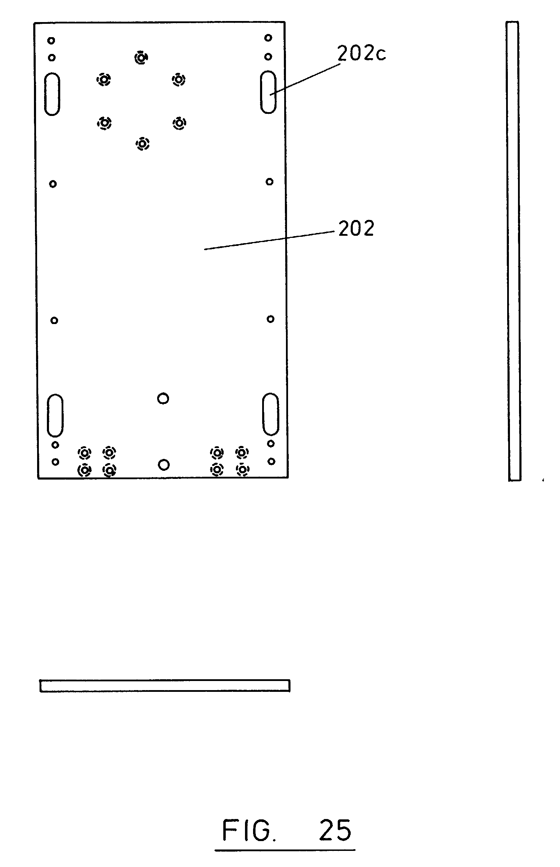

Figure 25 illustrates in different views the detail of the mounting plate shown in Figure 20,

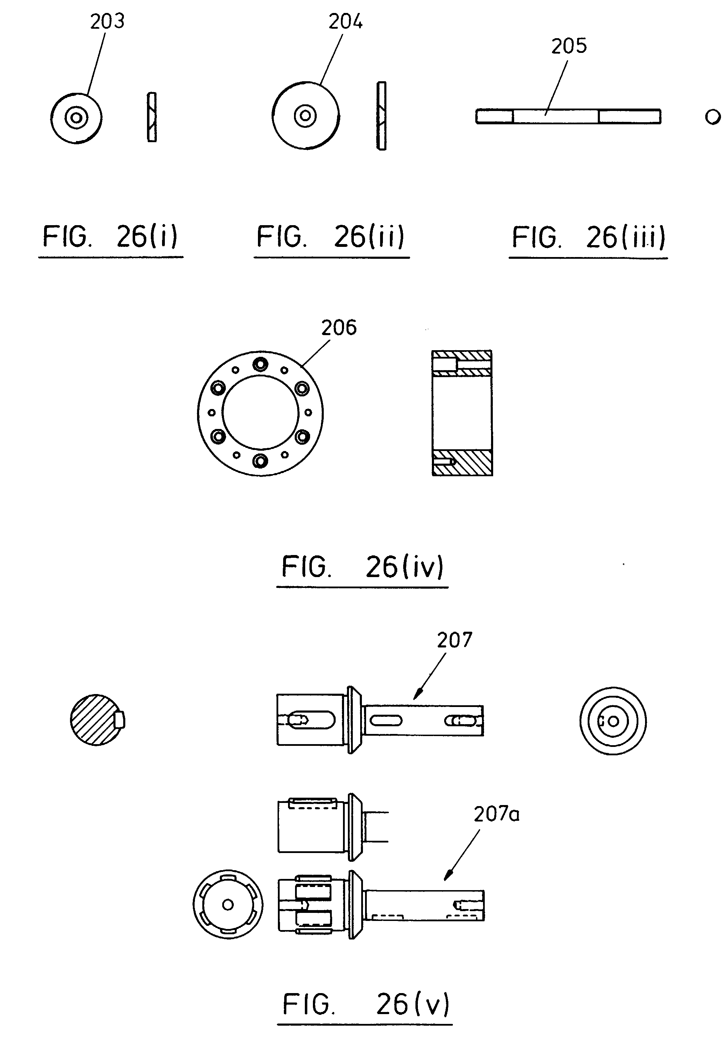

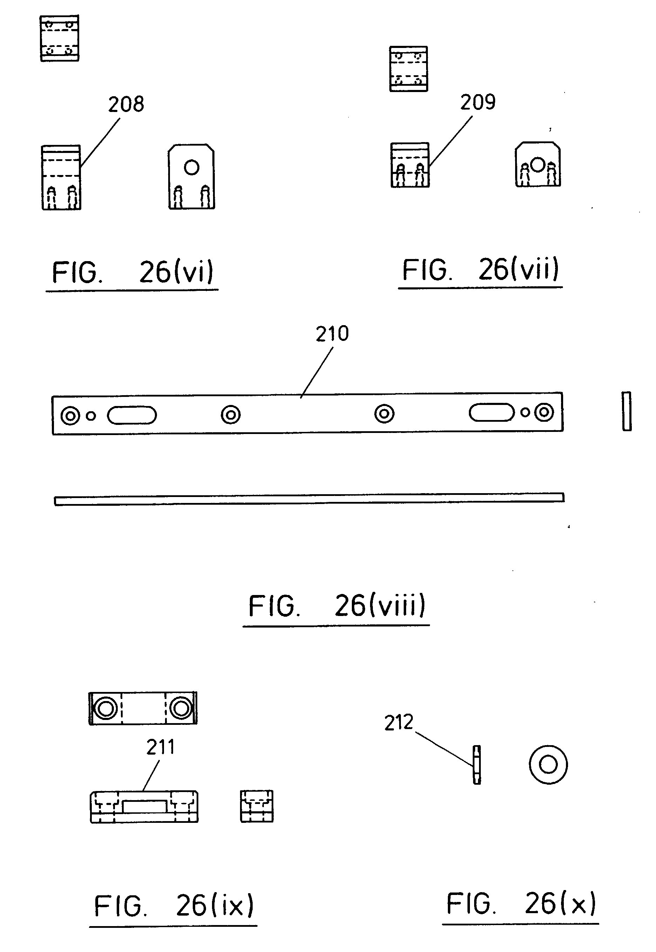

Figures 26(i) through 26(x) illustrate in detail the various different components forming the drive unit of Figure 20,

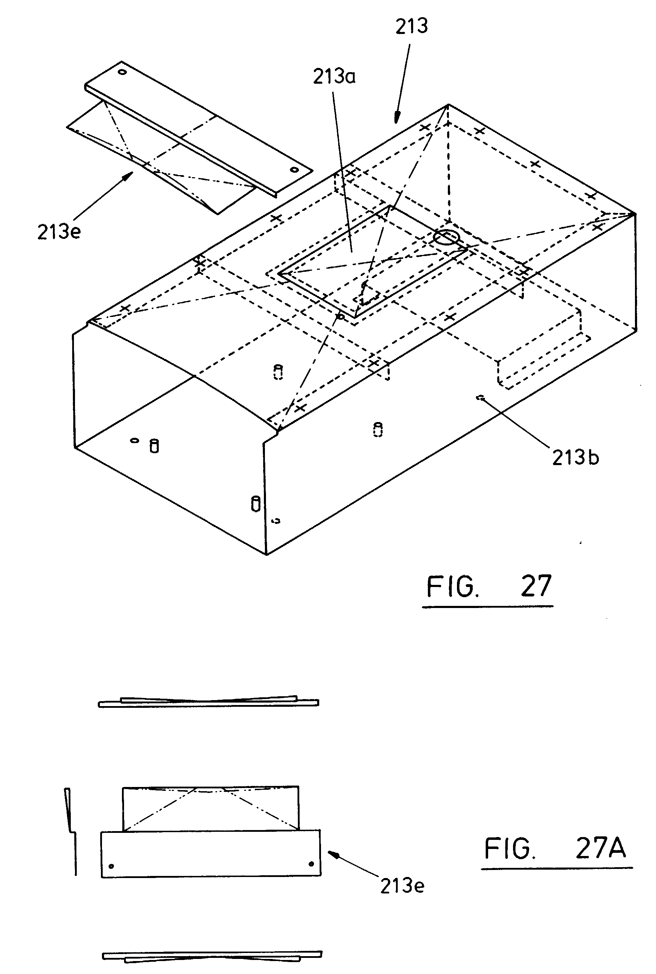

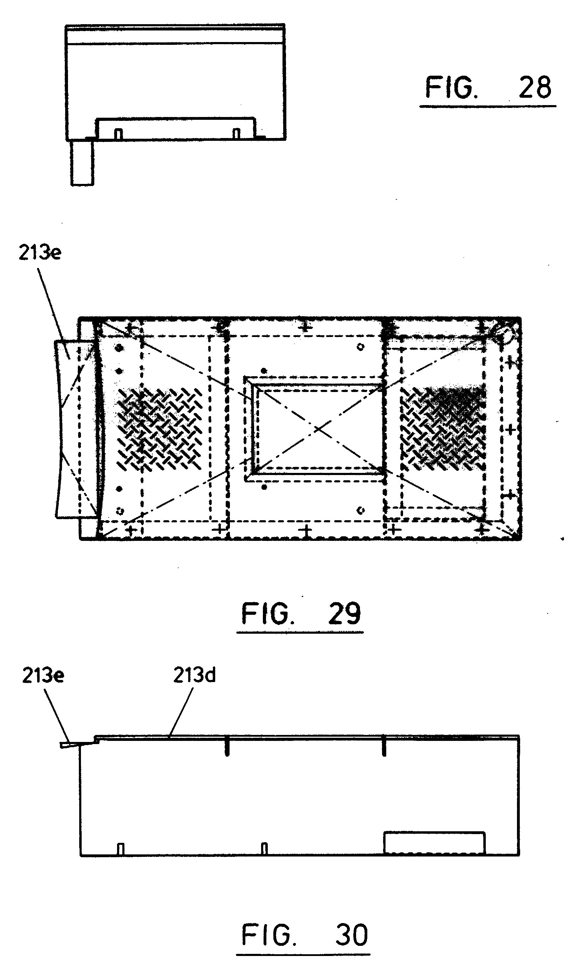

Figures 27, 27A, 28, 29 and 30 illustrate in different views the detail of the drive unit enclosure shown in Figure 20,

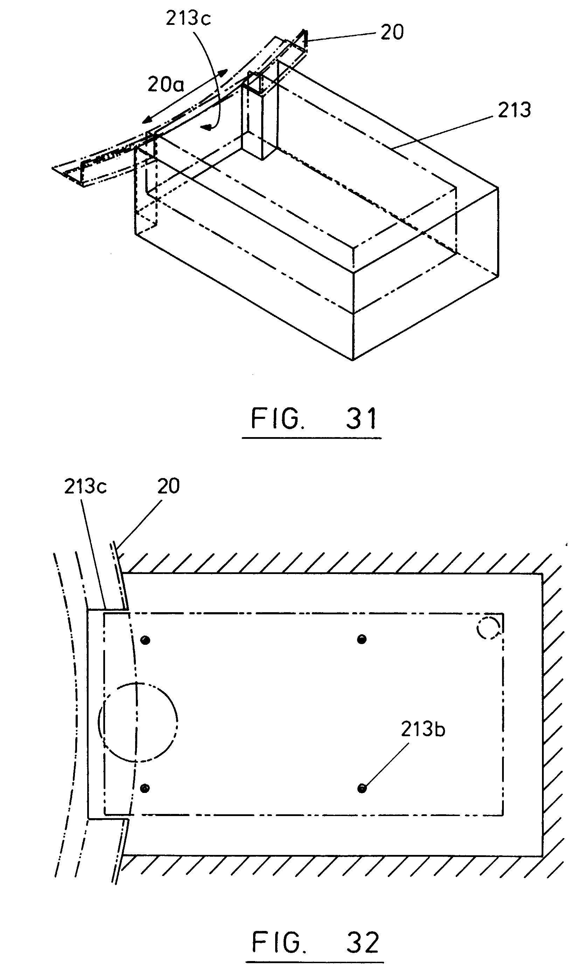

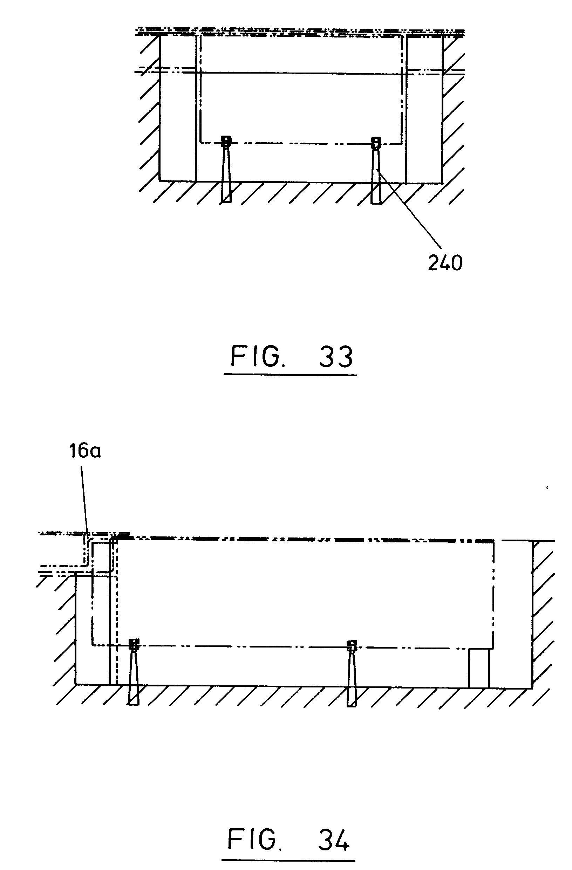

Figures 31, 32, 33 and 34 illustrate in different views the excavation and installation method for the drive unit.

Referring to the drawings, the platform assembly 10 of the present invention comprises generally circular decking 14 which is secured to and supported by framework 16.

The decking 14 includes four wheel stops 11 each of which engages one of the four wheels 12 of a car parked on the decking 14, as well as two hinged access flaps 13, illustrated in detail in Figure 8B. These flaps provide access through the decking to the framework, bearing means and foundation member beneath, for maintenance and repair purposes.

Shown in Figure 9 is a foundation ring 20 in the form of an annular member with L shaped cross section, which is bolted to the ground by means of eight foundation bolts 21.

The perimeter of the decking 14 also includes temporary securing means in the form of four pin locating lugs 15 which are disposed equally around the edge of the decking and protrude beyond the edge thereof, the protruding portion including a hole 15a therein. At one particular position, marked as 17 in Figure 5, the foundation ring 20 has secured thereto a pin locator socket 20a, such that when the hole 15a of one of the pin locating lugs is aligned with the socket, a pin 2 may be inserted thus securing the decking 14 with respect to the foundation ring 20. Thus, the decking 14 may be temporarily secured to the foundation ring 20 in any one of four rotational positions angularly spaced at 90° from one another.

Anti-theft locking means is provided in the form of at least one foundation lock lug 20b (see Figure 2(vi)) secured to the foundation ring at 18, this also having a hole 20c therein for alignment with hole 15c in platform lock lug 15b secured to the outer edge of the decking 14 at position 18'(see Figure 2(vi)). By this means, once the vehicle has been driven onto the decking 14 and engaged by wheel stops 11, the platform may be rotated through 90° until lock lug 15b is aligned with lock lug 20b, whereupon a padlock or the like (not shown) is inserted through aligned holes 15c, 20c, to lock the platform to the foundation ring in a position transverse to the direction of travel of the vehicle. It will be seen that by providing two foundation lock lugs and one platform lock lug, or vice versa, the locking means may be implemented after a 90° rotation of the platform either clockwise or counterclockwise.

The foundation ring 20 also includes eight rollers 22 comprising cast iron untyred wheels, each mounted onto the horizontally disposed flange of ring 20, for rotation about an axis parallel to the plane of the decking. The underneath surface of annular framework member 16a provides a running surface for these wheels, to allow the platform decking 14 to rotate in a controlled manner with respect to the foundation ring 20.

The framework 16 comprises an annular outer member 16a, to which is welded four cross stretchers 16b of rolled steel channel, as illustrated in detail in Figure 6. The structure is further strengthened by additional members 16c.

The bearing means 30 comprises a proprietary standard series slewing ring composed of two concentric rings 32, 34 with bearings 33 between the two rings. These rings are modified by drilling four holes 32a in ring 32 and eight holes 34a in ring 34, all holes being equidistantly spaced around the respective ring. The ring 34 is bolted through holes 34a to corresponding equidistantly spaced upstanding bosses 40a in slewing ring baseplate 40 (see Figures 3 and 10), these bosses having tapped holes therein for receiving the connecting bolts. The other ring 32 is screwed to the decking 14 through aligned holes 32a and 14a.

Referring to Figures 10 through 10C, the slewing ring baseplate 40, which when intended for recessed installation (i.e installation within a concrete lined excavated cavity) is disposed between and connected to a pair of elongate unequal steel angle members 42, 43, is bolted via four holes 40b to a central concrete plinth 50 formed at the base of the installation excavation illustrated in Figures 3 and 14A. The free ends of elongate angle members 42, 43 are bolted at points 21a to the foundation ring 20. However, when the assembly is to be surface mounted without excavation, the baseplate 40' incorporating bosses 40a' is secured directly to the ground via bolts or other suitable fixing means through holes 40b' (see Figures 10D and 10E).

A typical installation will now be described, with reference to the drawings and in particular to Figures 14 and 15. A generally circular excavation is made, and lined with concrete 60 to form a bowl shape, which extends downwardly towards the centre of the circle where the plinth 50 is located. A drainage pipe 52 is set in the concrete 60, with one end adjacent the base of the plinth 50 and the other connected into an existing surface water drain or soak-away, to direct waste water that may collect in the concrete lined excavation away from the area. A circle of blockwork is provided around the edge of the concrete, to provide a suitably flat seating surface for the foundation ring 20.

The foundation ring 20 is then bolted to the blockwork with bolts 21, such that the upper edge of the vertical flange of ring 20 is flush with the surrounding ground, reinstating the ground around the outer edge of the ring as required. The central plinth 50 is then drilled to receive four rawlplugs or equivalent high performance anchoring means 40c. As illustrated in Figure 11, a set of three spacers 51 (6mm, 4mm and 2mm respectively) are provided, such that one or more spacers may be inserted between the plinth 50 and the baseplate 40, to make up any difference in level between the foundation ring and the top of the plinth.

The slewing ring base plate 40 and elongate members 42, 43 are then connected to the central plinth 50 and to the foundation ring 20 respectively, having first inserted the required number of spacers 51, if any, and ring 34 of the slewing ring 30 is screwed to bosses 40a on the base plate 40. The framework 16 is then placed on top of the base plate 40 and associated elongate members 42,43, such that the framework is supported by the underlying base plate assembly. The decking 14 is subsequently bolted at four points around the centre to ring 32 of slewing ring 30. When installed, the decking 14 very slightly overhangs the edge of the foundation ring 20, but is generally speaking flush with the ground, so that the vehicle may drive onto and off the platform without the use of ramps.

Referring now in particular to Figures 1A and 3A, when the assembly is surface mounted, the foundation ring 20 is secured to the ground, the platform comprising decking 14 and framework 16 with ring 32 of bearing 30 and baseplate 40' already secured thereto is seated on top of and generally within the foundation ring 20, and the slewing ring baseplate 40' is secured to the ground at a central position relative to the ring, utilising the access flaps 13 in the decking. In this particular embodiment, ramps 70, 72 are provided to give access to and from the platform.

Whether the assembly is recessed (i.e installed within an excavation) or surface mounted, the bearing means may comprises either a slewing ring as previously described, or alternatively the bearing means may be provided by a number, typically six, of horizontally disposed rollers 76 mounted on brackets 73 on the foundation ring 20' as illustrated particularly in Figures 2B and 9'. These rollers 76 serve as bearing and centring means, allowing the platform to rotate centrally within and with respect to the foundation ring 20'.

A recessed installation with slewing ring is illustrated in Figure 1, a surface mounted installation with slewing ring in Figure 1A, a recessed installation with bearing/centring rollers in Figure 1B, and a surface mounted installation with bearing/centring rollers in Figure 1C.

This alternative bearing means enables a much simpler installation, whether surface mounted or recessed. As illustrated in Figures 16 and 16A, all that is necessary is to fit the modified foundation ring 20' with integral brackets 73 around the edge of concrete lined installation 60' (incorporating drain 52'), and drop the framework and platform assembly down into position on the foundation ring 20'.

A portion 74 of the platform 14 (14') is provided flat to receive a registration plate (not shown) giving the dimensions and other specifications of the assembly.

Figures 17 to 19 inclusive illustrate an embodiment in which the platform, framework and foundation ring are all provided in sections, to be assembled on site.

Referring in particular to Figure 17, the foundation ring 80 is provided in two equal halves 82, 84, which are secured together by means of two cap screws 81, 83.

As shown in Figure 18, the framework 90 is provided in the form of separate lengths of rolled steel angle 92,94 and 96,98 which when bolted together "back to back" form the cross members of the framework and two halves 96, 98 each being semicircular rolled steel angle which when welded together form the outer ring of the framework. Prior to transportation to the installation site, the sections 96, 98 and 92, 94 are pinned and bolted together by means of location pins 100 located at positions 100 and 102, and bolts 104 located at the ten positions on each pair shown in Figure 18. The two halves 96, 98 of the outer ring are then welded together, maintaining the concentricity. The welding of the complete framework is then completed, maintaining flatness and concentricity. Then, the outer ring composed of welded together sections 96, 98 is cut at four points 106 to create a central section and two wing sections, dressing all sharp edges produced during cutting. The assembly can then be separated into its central and wing sections by removing the bolts 104, these being re-fitted and tightened at the installation site.

Likewise, the decking 110 is provided in a correspondingly shaped central section 114 and two correspondingly shaped wing sections 112.

In this way, the whole assembly may be loaded onto a lorry in what is known as "flatpack" form, to be assembled as described at the installation site.

Referring to Figures 20, 21, 22, and 23, in this embodiment the assembly includes a drive unit 200 comprising a wheel 221 mounted on spindle 207 for rotation about a vertical axis, driven by a geared motor unit 222. The wheel and motor assembly is mounted on a mounting plate 202 by means of motor adaptor 206, the mounting plate 202 being mounted on a base plate 201 with a wear strip 210 disposed between plates 202 and 201.

The base plate 201 extends beyond the end of mounting plate 202, and on this protruding portion there is mounted an adjustment assembly known as a "de-sta-co" latch 220. This is operatively connected to the mounting plate 202, such that when the latch handle is in the position shown in solid lines in Figure 20, the mounting plate 202 is pulled back against the action of disk springs 223, thus disengaging the wheel 221 from the platform edge 16a. When the latch handle is pivoted into the position shown in broken lines in Figure 20, the disk springs 223 relax, urging the wheel 221 into engagement with the platform edge 16a.

The drilling details for base plate 201 and mounting plate 202 are illustrated in Figures 24 and 25 respectively. They include four holes 201a for receiving studs 201b, and four slots 201c on base plate 201, with corresponding slots 202c on mounting plate 202.

Referring to Figures 26(i) and 26(ii), clamping washer 203 is used to capture the drive shaft 207 in the geared motor unit 222, and clamping washer 204 is used in the connection of the wheel 221 to drive shaft 207. In Figure 26(iii), stud 205 locates and supports the disc springs 223 between stop blocks 208 and 209. In Figure 26(ix), slide block 211 allows a degree of overrun when the latch 220 is released, and in figure 26(x) clamping washer 212 is used in the clamping of the base plate 201 to the enclosure 213 and mounting plate 202.

In Figures 27 to 30, the drive unit enclosure 213 is illustrated in detail. It includes a central, hinged access flap 213a and has four holes 213b drilled in its base, for receiving foundation bolts 240. A separate shroud 213e is secured to the turned-over outer edges of the enclosure 213, trapped between these edges and the upper plate 213d. This shroud is positioned over the wheel and directs water away from the driving surface, due to its generally triangular profile as illustrated in Figure 27A.

The installation of the enclosure is illustrated in Figures 31 to 34. First, a substantially rectangular excavation is made adjacent the foundation ring 20, which is larger than the overall size of the housing 213. The end of the housing 213 has a protruding section 213c which is shaped to fit into the space created by removal of a section 20a of the foundation ring 20. The drive enclosure 213 is then located in the excavation such that the top of the enclosure is flush with the top of the foundation ring and with the surrounding ground, with the protruding portion 213 positioned correctly with respect to the foundation ring at both sides. At this stage, the electrical supply into the excavation and enclosure from an external supply is provided.

The base plate 201, once secured to the enclosure, is adjusted to bring the drive unit into the correct position, using the slots 201c for this purpose. Once mounted on the mounting plate 202, the wheel and geared motor assembly can be moved to and fro between operative and inoperative positions under the action of handle 220, such that mounting plate 202 slides over base plate 201, using slots 202c to allow such movement, with wear strip 210 preventing damage to the two plates.

As can be seen from Figures 20 and 22, clamping washers 212 and nuts 233 provide initial location during installation, whereas washers 212 and nuts 232 provide sliding fore/aft movement for engagement/disengagement of the drive.

In the preferred embodiment, the drive unit is operated remotely, by means of a key fob transmitter and associated receiver within the unit.

## Claims

1. A platform assembly (10) characterised in that it comprises a foundation member (20), a platform (14, 16) disposed above said foundation member, and bearing means (30, 76) for allowing rotation of the platform relative to the foundation member.

2. An assembly according to Claim 1 further characterised in that it is intended either for installation in a cavity previously excavated in the ground, or to be secured to the ground without the need for excavation.

3. An assembly according to Claim 1 or Claim 2 further characterised in that the platform (14) includes means (11) for engaging at least one wheel of a car or other vehicle parked thereon.

4. An assembly according to Claim 2 or Claim 3, further characterised in that the assembly is intended to be secured to the ground with the platform slightly above ground level and there are provided a pair of ramps (70, 72) disposed anywhere around the perimeter of the platform to provide entry/exit ramps.

5. An assembly according to any of the preceding Claims, further characterised in that the foundation member (20) comprises a ring and the platform (14, 16), which is also circular and sized so as to accommodate a car or other vehicle thereon, is mounted centrally with respect to the foundation member on the bearing means (30, 76) permitting rotation of the platform relative to the fixed foundation member.

6. An assembly according to any of the preceding Claims, further characterised in that the platform comprises two separate components, a framework (16) of an annular outer member (16a) to which four equal length cross members (16b) are attached in a generally square, intersecting pattern, and an upper decking member (14) which is fixed at a number of points to the underlying framework.

7. An assembly according to Claim 6, further characterised in that the decking (14) includes at least one access flap (13) therein, which is hinged and normally lies flush with the decking, but which may be opened to allow access to the structures underneath for the purposes of maintenance and repair.

8. An assembly according to any of the preceding Claims, further characterised in that the bearing means (30) comprises a slewing ring, which is essentially a large diameter bearing, composed of two concentric rings (32, 34) one of which is fixed relative to the ground/foundation member and the other of which is fixed to the rotating platform, the two rings including bearings (33) between adjacent vertical flanges.

9. An assembly according to any of Claims 5 to 8, further characterised in that there are provided a number of vertically disposed rollers (22) which are mounted on the foundation ring (20) at generally equal spacings around the ring such that when the platform (14, 16) is rotated the underneath of the edge of the platform runs on these rollers.

10. An assembly according to Claim 8 or Claim 9, further characterised in that the assembly includes means for maintaining the concentricity of the platform and foundation ring, such means comprising two elongate members (42, 43) each fixed at each end to the foundation ring (20) across a diameter thereof, and a baseplate (40) centrally disposed between the two elongate members, said baseplate including means for securing one of the rings of the slewing ring (30) thereto, the elongate members and the baseplate together ensuring concentricity of the slewing ring/platform with respect to the foundation member/excavation.

11. An assembly according to Claim 8 or Claim 9, further characterised in that the foundation ring (20) and the slewing ring baseplate (40') are bolted directly into the ground.

12. An assembly according to any of the preceding Claims, further characterised in that the bearing means alternatively or additionally comprises a number of horizontally disposed rollers (76) mounted on the foundation ring (20) at generally equally spaced positions around the ring, such that during rotation of the platform a part of the framework will run on these horizontally disposed rollers.

13. An assembly according to any of the preceding Claims, further characterised in that the assembly includes means (2, 15a, 20a) for temporarily securing the platform in one or more particular rotational positions with respect to the foundation frame.

14. An assembly according to any of the preceding Claims, further characterised in that the assembly includes means (15b, 15c, 20b) for enabling the platform to be locked to the foundation member in one or more particular rotational positions to provide an anti-theft facility.

15. An assembly according to any of the preceding Claims, further characterised in that the platform (14), framework (16) or foundation member (20), or any one or combination of these, is preferably provided in two or more sections, to be bolted, welded or otherwise secured together at the installation site.

16. An assembly according to any of the preceding Claims, further characterised in that the assembly includes drive means (200) for driving the platform relative to the foundation member, said drive means preferably being movable between an operative position in which the drive means engages the platform, and a stowed, inoperative position in which the drive means is disengaged from the platform.

17. An assembly according to Claim 16, further characterised in that the drive means (200) comprises a wheel (221) mounted for rotation about a substantially vertical axis, such that the edge of the wheel engages the edge of the platform when the drive means is in the operative position, said wheel being driven by a geared motor unit (222).

18. A method of installing a platform assembly comprising a foundation member (20), a platform (14, 16) disposed above said foundation member and bearing means (30, 76) for allowing rotation of the platform relative to the foundation member, the installation method including the steps of:-
securing the foundation member either directly on to the ground, or within a cavity previously excavated in the ground, and
positioning the platform above said foundation member.
